# EUROPEAN PATENT APPLICATION

(11) **EP 4 708 546 A1**
(43) Date of publication of application: **11.03.2026**
(21) Application number: 24940900.4
(22) Date of filing: 12.12.2024
(51) Int. Cl.: H01M 50/531, H01M 50/533, H01M 50/184, H01M 50/105, H01M 50/595, H01M 50/249

(54) **POUCH TYPE BATTERY CELL AND VEHICLE INCLUDING SAME**

(30) Priority: 12.06.2024 KR 20240076521
(71) Applicant: LG ENERGY SOLUTION, LTD., Seoul 07335 (KR)
(72) Inventor: JUNG, Ki Taek, Daejeon 34122 (KR)
(74) Representative: Plasseraud IP
(86) International application number: PCT/KR2024/020291
(87) International publication number: WO 2025/258770

(57) **Abstract**

Disclosed are a pouch-type battery cell which is thick and thus has improved durability and stability while maintaining the formability and insulation performance of a pouch and a vehicle including the same. The battery cell includes an electrode assembly formed by overlapping a plurality of electrodes, a packaging material folded to wrap around the electrode assembly to form a rectangular pouch, a sealing part formed by overlapping and contacting edges of the folded packaging material in which the electrode assembly is wrapped, and a pair of leads whose ends are connected to the plurality of electrodes inside the packaging material and whose other ends are exposed to the outside of the packaging material. The pair of leads are exposed in the same direction.

## Description

### TECHNICAL FIELD]

The present disclosure relates to a pouch-type battery cell which is thick and thus has improved durability and stability while maintaining the formability and insulation performance of a pouch and a vehicle including the same.

### [BACKGROUND ART]

Recently, technologies for reducing carbon are being actively developed to solve environmental problems such as abnormal temperatures. In order to reduce carbon, it is necessary to produce energy in an eco-friendly manner rather than producing energy using fossil fuels, store the produced energy in the form of electric energy, and use the stored electric energy in vehicles, various industrial sites, and homes.

In order to utilize electric energy for reducing carbon, the use of a battery that can store and extract electric energy is essential. Therefore, in order to sufficiently store electric energy and use the same without inconvenience, it is necessary to secure the performance of the battery.

Batteries mainly utilize the oxidation-reduction reaction of metal ions. High-density metal ions are used to increase the capacity, charge/discharge performance, and efficiency of a battery, and much research is being conducted on materials constituting electrolytes and solid electrolytes. However, as battery performance improves, there is a problem of decreased stability in general.

Meanwhile, cylindrical battery cells, square battery cells, and pouch-type battery cells are widely used. Cylindrical battery cells have a simple structure, relatively low manufacturing cost, high mechanical strength, and excellent heat dissipation ability. However, cylindrical battery cells are inefficient in terms of space utilization and may be limited in applications requiring high energy density. Square battery cells provide higher space utilization and can achieve large capacity and high energy density. However, square cells have a complex manufacturing process, are expensive, and have a risk of case deformation due to internal pressure.

To solve these problems, pouch-type battery cells have recently been attracting attention. Pouch-type battery cells are advantageous in achieving weight reduction and higher energy density by using flexible packaging materials. Pouch-type battery cells have excellent structural flexibility and thus can be manufactured in various shapes, and the manufacturing process can be simplified.

However, pouch-type battery cells need to be improved in terms of durability and safety, and in particular, pressure resistance and heat dissipation performance need to be enhanced. The matters described as background technology above are only intended to enhance understanding of the background of the present disclosure and should not be taken as an acknowledgment that they correspond to prior art already known to those skilled in the art.

### [DETAILED DESCRIPTION OF INVENTION]

### [TECHNICAL PROBLEMS]

An object of the present disclosure proposed to solve the above-described problems is to provide a thick pouch-type battery cell capable of maintaining formability and insulation performance, and a vehicle including the same.

The technical objects to be achieved in the present disclosure are not limited to the technical objects mentioned above, and other technical objects not mentioned will be clearly understood by those skilled in the art to which the present disclosure belongs from the description below.

### [TECHNICAL SOLUTION]

To achieve the aforementioned object, a battery cell according to the present disclosure includes an electrode assembly formed by overlapping a plurality of electrodes, a packaging material folded to wrap around the electrode assembly to form a rectangular pouch, a sealing part formed by overlapping and contacting edges of the folded packaging material in which the electrode assembly is wrapped, and a pair of leads whose ends are connected to the plurality of electrodes inside the packaging material and whose other ends are exposed to the outside of the packaging material. The pair of leads may be exposed in the same direction.

In the battery cell of the present disclosure, the pair of leads may be disposed together on one side of the pouch in the rectangular shape.

In the battery cell of the present disclosure, the pair of leads may be disposed on the upper surface of the pouch, and the other ends thereof may protrude upward.

In the battery cell of the present disclosure, the sealing part may be bent to contact the upper surface and the side surface of the pouch.

In the battery cell of the present disclosure, wing portions formed by folding the packaging material may be positioned at the top and bottom of the side surface of the pouch, and the wing portions may be folded to contact the side surface of the pouch.

In the battery cell of the present disclosure, a pair of protrusions may be formed on the upper surface of the pouch, and the other ends of the pair of leads may be exposed to the outside through the ends of the protrusions.

In the battery cell of the present disclosure, the sealing part on the upper surface of the pouch may be bent in a horizontal direction, and the protrusions may be bent upward to form a terrace structure.

In the battery cell of the present disclosure, the pair of leads may be bent in the horizontal direction and then bent upward to form a terrace structure.

In the battery cell of the present disclosure, an insulating tape may be disposed on the side surface of the pouch to fix bending of the sealing part and cover the sealing part on the side surface of the pouch.

In the battery cell of the present disclosure, the wing portions formed by folding the packaging material may be disposed at the top and bottom of the side surface of the pouch. the wing portions may be folded to be positioned on the side surface of the pouch, and the insulating tape may be disposed to cover the wing portions.

In the battery cell of the present disclosure, the insulating tape may extend from the side surface to the upper surface of the pouch, cover the sealing part on the upper surface of the pouch, and fix bending of the sealing part.

In the battery cell of the present disclosure, the insulating tape may cover the bent sealing part on the upper surface of the pouch, avoiding the protrusions and the connecting sealing part.

In the battery cell of the present disclosure, the pair of protrusions may be connected through a connecting sealing part while being spaced apart from each other. The insulating tape may cover the bent sealing part on the upper surface of the pouch, avoiding the protrusions and the connecting sealing part.

In the battery cell of the present disclosure, the insulating tape may extend to the lower surface of the pouch.

In the battery cell of the present disclosure, the width of the insulating tape may be greater than the width of the sealing part and less than the side width of the pouch.

In the battery cell of the present disclosure, the height of an internal space of the pouch is greater than the height of the electrode assembly, and a gas pocket may be formed at an upper part of the internal space of the pouch.

A battery pack of the present disclosure may include the battery cell of the present disclosure.

A vehicle of the present disclosure may include the battery pack of the present disclosure.

### [EFFECT OF INVENTION]

According to the present disclosure, it is possible to solve a problem that the thickness of a pouch-type battery call cannot exceed the maximum thickness of 20 mm of existing pouch-type battery cells while maintaining the formability and insulation performance of the pouch-type battery cell, thereby providing a pouch-type battery cell thicker than the conventional maximum thickness and a vehicle including the same.

The effects obtained from the present disclosure are not limited to the effects mentioned above, and other effects not mentioned can be clearly understood by those skilled in the art to which the present disclosure belongs from the description below.

### [BRIEF DESCRIPTION OF THE DRAWING]

FIG. 1 is a diagram showing a battery cell according to an embodiment of the present disclosure.
FIG. 2 is a diagram for describing the effect of a protrusion according to an embodiment of the present disclosure.
FIG. 3 is a front view of the battery cell according to an embodiment of the present disclosure.
FIG. 4 is a top view of the battery cell according to an embodiment of the present disclosure.
FIG. 5 is a side view of the battery cell according to an embodiment of the present disclosure.
FIG. 6 is a bottom view of the battery cell according to an embodiment of the present disclosure.
FIG. 7 is a cross-sectional view taken along line A-A' of FIG. 1.
FIG. 8 is a side view of a lead according to an embodiment of the present disclosure.
FIG. 9 is a diagram showing a packaging material according to an embodiment of the present disclosure.
FIGS. 10 to 13 are diagram illustrating packaging of the battery cell according to an embodiment of the present disclosure.
FIG. 14 is a diagram showing a vehicle to which the battery pack according to an embodiment of the present disclosure is applied.

### [BEST MODE FOR CARRYING OUT THE INVENTION]

In the following description, a detailed description of known functions and configurations incorporated herein will be omitted when it may obscure the subject matter of the present disclosure. The same reference numbers will be used in the drawings to refer to the same or like parts. In addition, the attached drawings are only intended to facilitate easy understanding of the embodiments disclosed in this specification, and the technical ideas disclosed in this specification are not limited by the attached drawings, and should be understood to include all modifications, equivalents, or substitutes included in the spirit and technical scope of the present disclosure.

Although terms such as, for example, "first" and "second" may be used to describe various elements, these terms are merely used to distinguish the same or similar elements from each other. An element described in the singular form is intended to include a plurality of elements unless the context clearly indicates otherwise.

In the present specification, the term "comprise" or "include" is intended to specify the presence of a described feature, number, step, operation, component, part, or a combination thereof, but should be understood as not excluding in advance the possibility of the presence or addition of one or more other features, numbers, steps, operations, components, parts, or combinations thereof. The suffixes "module" and "unit" of elements used in the following description are used for convenience of description and thus can be used interchangeably and do not have any distinguishable meanings or functions.

When a component is "coupled" or "connected" to another component, it should be understood that a third component may be present between the two components although the component may be directly coupled or connected to the other component. When a component is "directly coupled" or "directly connected" to another component, it should be understood that no element is present between the two components.

Hereinafter, embodiments disclosed in this specification will be described in detail with reference to the attached drawings. Regardless of the drawing symbols, identical or similar components will be given the same reference numerals and redundant descriptions thereof will be omitted.

As battery cells, cylindrical battery cells, square battery cells, and pouch-type battery cells are widely used. Cylindrical battery cells have a simple structure, relatively low manufacturing cost, high mechanical strength, and excellent heat dissipation ability. However, cylindrical battery cells are inefficient in terms of space utilization and may be limited in applications requiring high energy density. Square battery cells provide higher space utilization and can achieve large capacity and high energy density. However, square cells have a complex manufacturing process, are expensive, and have a risk of case deformation due to internal pressure.

To solve these problems, pouch-type battery cells have recently been attracting attention. Pouch-type battery cells refer to battery cells that contain electrodes and electrolytes in a pouch made of flexible foil-like composite materials of metal and plastic. Pouch-type battery cells are advantageous in achieving weight reduction and higher energy density by using flexible packaging materials. Pouch-type battery cells have excellent structural flexibility and thus can be manufactured in various shapes, and the manufacturing process can be simplified. However, pouch-type battery cells need to be improved in terms of durability and safety, and in particular, pressure resistance and heat dissipation performance need to be enhanced.

Meanwhile, in the production of a pouch-type battery cell, an electrode assembly including a plurality of electrodes is stacked inside the packaging material and then pressed. However, in this process, if pressing is performed beyond a certain depth, the insulation at the top and bottom of the pouch is destroyed, making it impossible for the battery cell to perform the function thereof. In addition, a problem of reduction in the formability of the battery cell occurs. Therefore, it has been difficult to produce a pouch-type battery cell having a thickness of a certain thickness (e.g., 16 mm) or more in the past.

However, when a pouch-type battery cell is thicker than a certain thickness, it is possible to secure a distance between adjacent battery cells, thereby delaying the time for heat and flame generated from adjacent battery cells to be transferred and enhancing the pressure resistance and heat dissipation performance of the pouch-type battery cell. Accordingly, the present disclosure provides a pouch-type battery cell having a thickness greater than a certain thickness (for example, 16 mm) and a method of manufacturing the same. The present disclosure relates to a pouch-type battery cell having improved durability and stability by having a thickness greater than a certain thickness while maintaining the formability and insulating performance of the pouch.

Specifically, a battery cell according to an embodiment of the present disclosure includes an electrode assembly 100 formed by overlapping a plurality of electrodes, a packaging material 200 folded to wrap around the electrode assembly 100 to form a rectangular pouch, a sealing part 210 formed by overlapping and contacting edges of the folded packaging material 200 in which the electrode assembly 100 is wrapped, and a pair of leads 300 whose ends are connected to the plurality of electrodes inside the packaging material 200 and whose other ends are exposed to the outside of the packaging material 200. The pair of leads 300 may be exposed in the same direction.

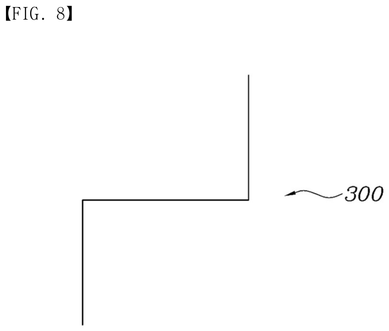

The thickness of the pouch may be 16 mm or more, preferably 20 mm or more. The pair of leads may be provided in a terrace structure. The "terrace structure" may be defined as a structure in which a pair of leads are bent in a horizontal direction and then bent to face upward, that is, in a vertical direction, as in the structure of the leads illustrated in FIG. 8.

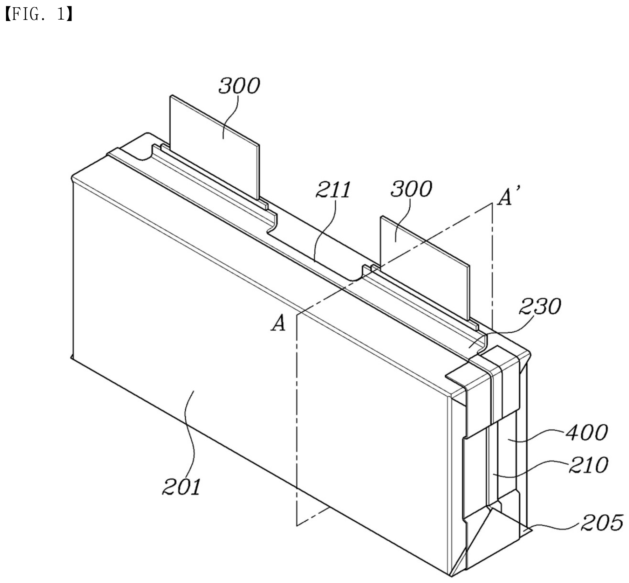

The battery cell of the present disclosure will be further described with reference to FIG. 1. The pair of leads 300 may be disposed together on one side of the pouch. The pair of leads 300 may be disposed on the upper surface of the pouch. One end of the pair of leads 300 may be positioned inside the pouch and may be welded and connected to a plurality of electrode tabs 110 of the electrode assembly 100. The other end of the pair of leads 300 may be exposed to the outside of the pouch and may be exposed outside through a protrusion 230.

More specifically, the pair of leads 300 may be disposed in the same direction in the same plane, and the pair of leads 300 may be disposed to face upward.

The overlapping edges of the packaging material 200 wrapping around the electrode assembly 100 may be in contact with each other to form the sealing part 210. The insulation of the battery cell can be secured through this sealing part 210. This sealing part 210 may be formed on the upper surface and the side surface of the pouch. In addition, the sealing part 210 may be bent to contact the upper surface and the side surface of the pouch, and the directions in which the sealing part 210 contacts the upper surface and the side surface of the pouch may be the same such that the sealing part 210 is not destroyed. In addition to the insulation secured through the sealing part 210, further enhanced insulation may be secured through the bent or folded structure of the sealing part 210.

Further, wing portions 205 formed by folding the packaging material 200 may be positioned at the top and bottom 203 of the side surface of the pouch. The wing portions 205 may be formed by folding the packaging material 200 along the dotted line of FIG. 1 as will be described below. The wing portions 205 may be folded to contact the side surface of the pouch. By folding the wing portions 205 to contact the side surface of the pouch, the folded wing portions 205 may cover the sealing part 210 to aid in maintaining the sealing state of the sealing part 210 more stably. In addition, the wing portions 205 may be in close contact with the pouch as much as possible to reduce the volume of the battery cell and accordingly increase the energy density.

Further, a pair of protrusions 230 are formed on the upper surface of the pouch. The pair of protrusions 230 may be disposed to be spaced apart from each other. In addition, a connecting sealing part 211 may be formed between the pair of protrusions 230 spaced apart from each other. The pair of protrusions 230 may be connected through the connecting sealing part 211 while being spaced apart from each other.

The sealing part 210 on the upper surface of the pouch may be bent horizontally to contact the upper surface of the pouch. The protrusions 230 may be bent upward to form a terrace structure. In addition, the pair of leads 300 exposed to the outside through the ends of the protrusions 230 may be bent horizontally and the other ends exposed to the outside may be bent upward to form a terrace structure.

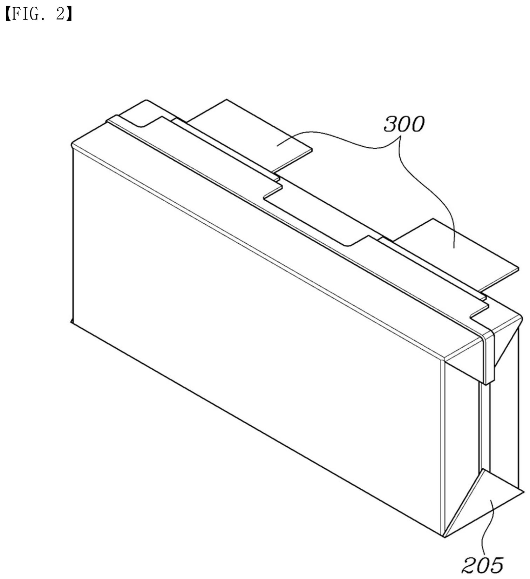

In this case, if the sealing part 210 is bent to contact the upper surface of the pouch and the protrusions 230 are not bent upward, the pair of protrusions 230 and the pair of leads 300 may be arranged to face horizontally instead of upward, as shown in FIG. 2. If pouch-type battery cells in this structure are stacked in the horizontal direction, interference may occur between the pair of leads 300 between adjacent battery cells. Therefore, the battery cell of the present disclosure, in which the protrusions 230 are bent to face upward, can prevent interference between adjacent battery cells, and the pair of leads 300 can be melted without additional station switching when they face the same direction (for example, upward). This simplifies the manufacturing process and reduces costs.

An insulating tape 400 for fixing bending of the sealing part 210 described above, fixing folding of the wing portions 205, and covering the sealing part 210 may be disposed on the side surface of the pouch.

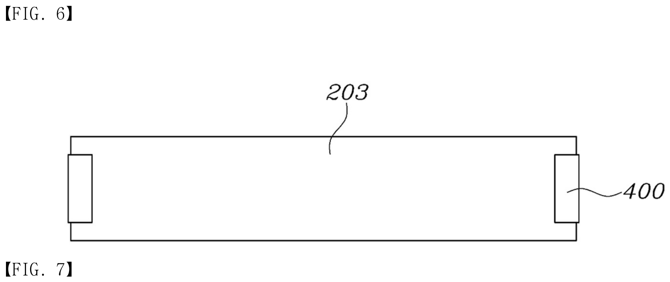

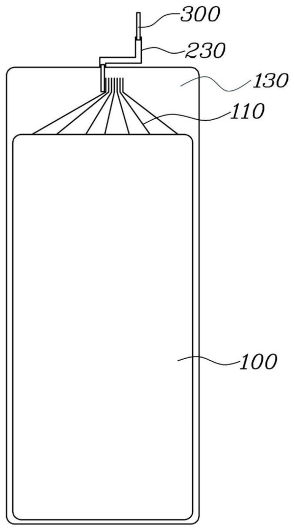

As shown in FIG. 1 and FIG. 4 to FIG. 6, the insulating tape 400 may extend from the side surface of the pouch to the upper or lower surface of the pouch. Through this structure, the insulating tape 400 can cover the bent sealing part 210 to fix bending of the sealing part 210, the contact area between the pouch and the insulating tape 400 can be increased to improve the adhesive strength of the insulating tape 400, and the shape of the pouch can be maintained.

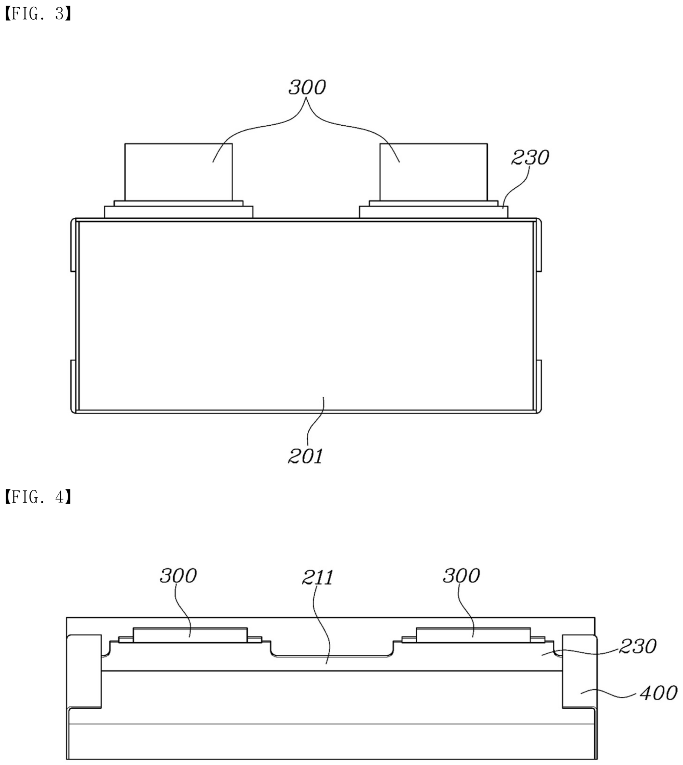

FIG. 3 is a front view of the battery cell according to the present disclosure. As shown in FIG. 3, the insulating tape 400 may not be provided on the front side of the pouch. In addition, the protrusions 230 may be bent to face upward, and the pair of leads 300 may be disposed such that they protrude outward through the ends of the protrusions 230 and face upward.

FIG. 4 is a top view of the battery cell of the present disclosure. As shown in FIG. 4, the pair of protrusions 230 may be arranged spaced apart from each other. The connecting sealing part 211 may be formed between the pair of protrusions 230. The insulating tape 400 may be arranged to extend from the side surface of the pouch to the upper surface of the pouch and cover a portion of the upper surface. More specifically, the connecting sealing part 211 between the pair of protrusions 230 may be disposed to avoid the points where the protrusions 230 are formed. Through this structure, venting may be performed through the connecting sealing part 211 that is not covered by the insulating tape 400 and thus has relatively weak sealing, rather than through the side or a portion of the upper surface of the pouch that is double-covered by the sealing part 210 and the insulating tape 400. Accordingly, venting may be induced to the upper surface of the pouch.

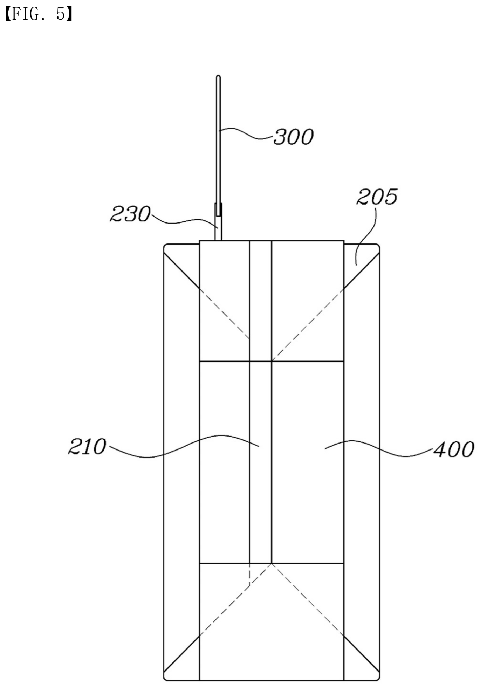

FIG. 5 is a side view of the battery cell of the present disclosure. As shown in FIG. 5, the wing portions 205 positioned at the top and bottom 203 of the side surface of the pouch may be folded to contact the side surface of the pouch. The insulating tape 400 may be placed on the side surface of the pouch while covering the sealing part 210 and the wing portions 205. Through this structure, the insulating tape 400 can cover the sealing part 210 while fixing bending of the sealing part 210 and folding of the wing portions 205, thereby maintaining sealing more effectively.

Meanwhile, the width of the insulating tape 400 may be greater than the width of the sealing part 210, and the width of the insulating tape 400 may be less than the width of the side of the pouch. Through this structure, the insulating tape 400 can effectively cover and protect the sealing part 210 from the outside, while minimizing the result of the area of the insulating tape 400 increasing excessively to hinder heat dissipation of the battery cell. In addition, by preventing the insulating tape 400 from being placed on the front side 201 of the pouch, when the battery cell of the present disclosure is stacked in a module or a pack housing 10, the sealing part 210 is not positioned on the front side of the pouch that comes into contact with an adjacent battery cell, thereby minimizing unnecessary space waste.

FIG. 7 is a cross-sectional view taken along A-A' of FIG. 1. The internal space of the pouch of the battery cell of the present disclosure will be described with reference to FIG. 7. As shown in FIG. 7, the electrode assembly 100 may be placed in the internal space of the pouch formed by folding the packaging material 200. For example, the height of the internal space of the pouch may be greater than the height of the electrode assembly 100, and thus a gas pocket 130 may be formed at the upper portion of the internal space of the pouch. The gas pocket 130 may primarily serve to accommodate gas and heat generated from the battery cell, and may effectively prevent and delay deterioration of the battery cell by protecting the electrode tabs 110 and one end of the lead 300 connected thereto from external impact.

One end of the lead 300 may be electrically connected to the electrode tabs 110 of the plurality of electrodes included in the electrode assembly 100. For example, one end of the pair of leads 300 and the electrode tabs 110 may be electrically connected by welding. One end of the pair of leads 300 may be located in the internal space of the pouch. One end of the pair of leads 300 may be positioned, for example, inside the gas pocket 130.

One end of the pair of leads 300 may be disposed to face the electrode assembly 100. For example, one end of the pair of leads 300 may extend downward from the upper part of the internal space of the pouch or the gas pocket 130 toward the electrode assembly 100 or may extend in the vertical direction. The other end of the pair of leads 300 may be bent to face upward and exposed to the outside of the pouch. The space between one end and the other end of the pair of leads 300 may extend in the horizontal direction, thereby forming the terrace structure described above.

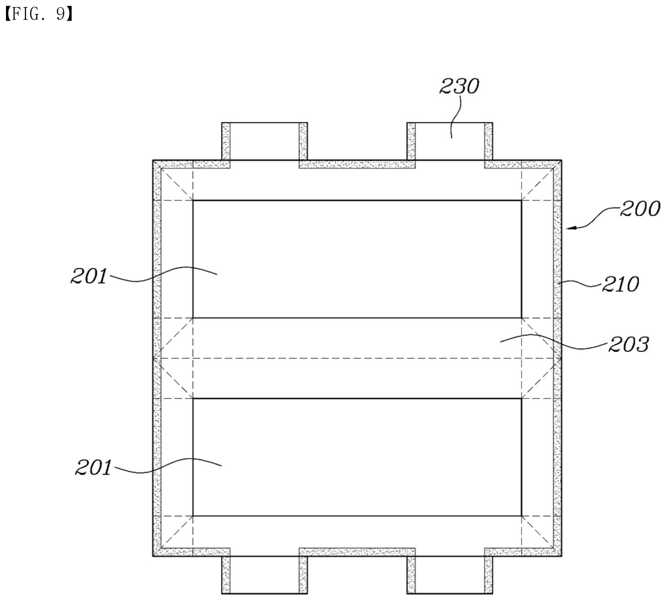

Manufacturing and packaging of the battery cell according to an embodiment of the present disclosure will be described with reference to FIGS. 9 top 12. FIG. 9 is a diagram showing the packaging material 200 according to an embodiment of the present disclosure. The pair of protrusions 230 may be formed spaced apart from each other on the upper end of the packaging material 200. The pair of protrusions 230 may also be formed spaced apart from each other on the lower end of the packaging material 200. The width and height of the protrusions 230 formed on the upper end of the packaging material 200 may be the same as the width and height of the protrusions 230 formed on the lower end of the packaging material 200. In addition, the distance between the pair of protrusions 230 formed on the upper end of the packaging material 200 may be the same as the distance between the pair of protrusions 230 formed on the lower end of the packaging material 200. Through this structure, at the time of wrapping the electrode assembly 100 in the packaging material 200 by folding the packing material 200, the protrusions 230 formed on the upper and lower ends of the packaging material 200 can correspond to each other.

In addition, the packaging material 200 may have a pair of front parts 201 that may face each other having the electrode assembly 100 therebetween when the packaging material 200 is folded to cover the front and rear of the electrode assembly 100, and a lower part 203 formed between the pair of front parts 201 to cover the bottom of the electrode assembly 100. In addition, when the packaging material 200 is folded to form the pouch, the packaging material 200 may be folded along the dotted line of FIG. 9 to form the wing portions 205.

The packaging material 200 is folded to wrap around the electrode assembly 100, and the overlapping edges of the packaging material 200 are in contact with each other to form the sealing part 210. In addition, the sealing part 210 may be bent to be in contact with the upper surface or side surface of the pouch. Through this structure, the sealing part 210 can effectively seal the inside of the pouch to secure insulation.

Meanwhile, the sealing part 210 may be formed at all overlapping edges of the packaging material 200. However, since the pair of leads 300 may be exposed to the outside of the pouch through the ends of the protrusions 230, the sealing part 210 may be formed by avoiding the ends of the protrusions 230.

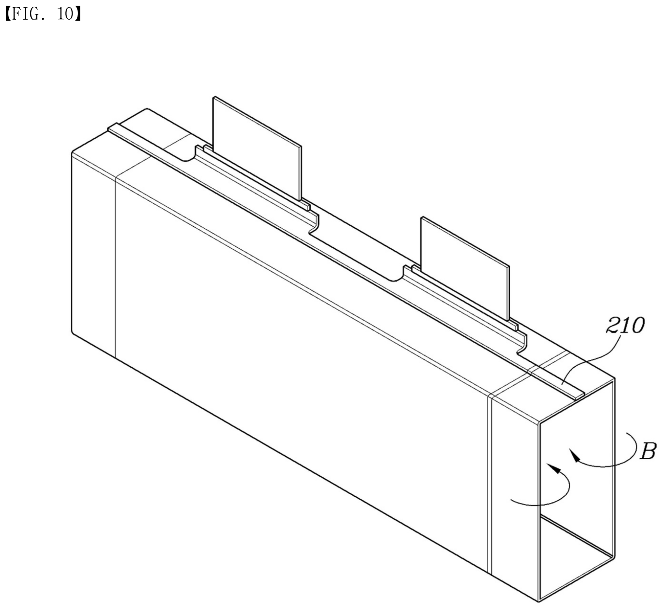

A process of packaging the battery cell according to an embodiment of the present disclosure will be described with reference to FIGS. 10 to 13. The electrode assembly 100 may be disposed such that the bottom of the electrode assembly is positioned on the lower part of the packaging material 200. As shown in FIG. 10, the pair of front parts 201 of the packaging material 200 may be disposed to face each other while covering the electrode assembly 100, and thus the overlapping edges of the packaging material 200 may come into contact with each other, thereby forming the sealing part 210 on the upper surface of the pouch. The sealing part 210 may be folded to contact the upper surface of the pouch. In addition, the sealing part 210 on the upper surface of the pouch may be folded in the horizontal direction, and the protrusions 230 may be folded upward to form the terrace structure described above.

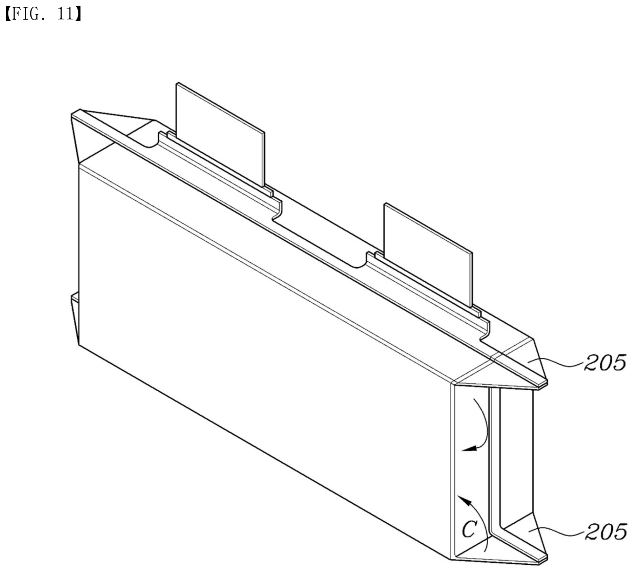

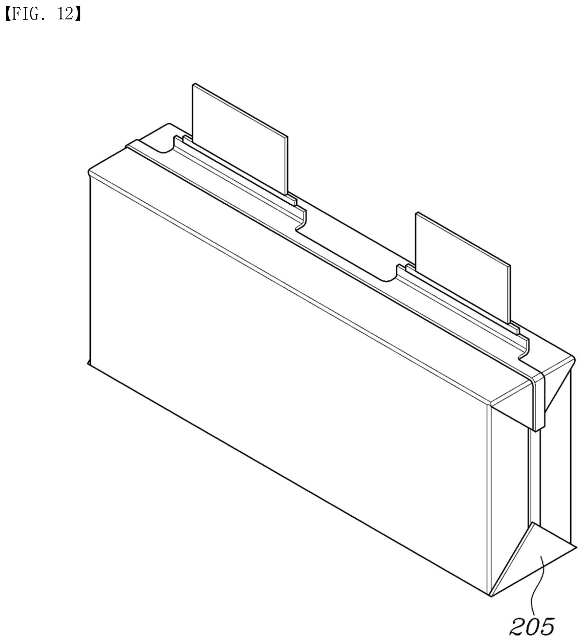

Thereafter, the side of the packaging material 200 may be folded in the horizontal direction B and thus the packaging material 200 may be packaged in a shape as shown in FIG. 11. In this process, the sealing part 210 may also be formed on the side surface of the pouch. In addition, the packaging material 200 may be folded to form the wing portions 205 at the top and bottom of the side surface of the pouch. Then, the wing portions 205 may be folded in the vertical direction C of the pouch, and thus the packaging material 200 may be packaged in a shape as shown in FIG. 12.

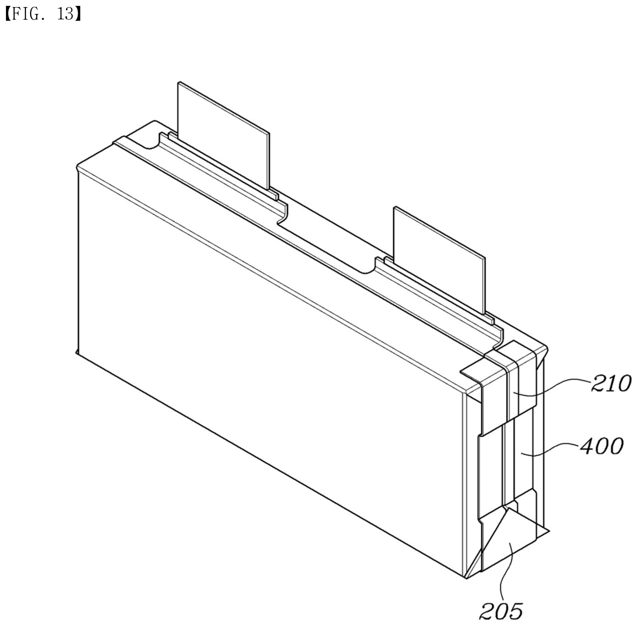

Thereafter, the insulating tape 400 may be placed on the pouch as shown in FIG. 13. The insulating tape 400 may fix the wing portions 205 folded to contact the pouch and fix the sealing part 210 folded to contact the upper surface or side surface of the pouch. In addition, the width of the insulating tape 400 may be greater than the width of the sealing part 210 and less than the side width of the pouch. In addition, the insulating tape 400 may extend to the lower surface or upper surface of the pouch, and thus the adhesive strength of the insulating tape 400 can be improved.

In the above-described manner, the packaging material 200 of the present disclosure can form a pouch of a battery cell. However, this is an example and is not necessarily limited to the above order. For example, after the insulating tape 400 of FIG. 13 is placed, the protrusion 230 may be bent to face upward.

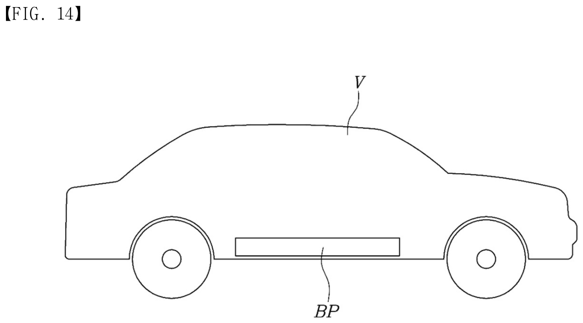

FIG. 14 is a diagram showing a vehicle to which a battery pack according to an embodiment of the present disclosure is applied. Referring to this figure, the battery pack according to an embodiment of the present disclosure may be applied to battery packs BP of various vehicles V such as internal combustion engine vehicles, electric vehicles, hybrid vehicles, and fuel cell vehicles as shown in FIG. 14, and may also be applied to battery packs BP of various fields such as industrial energy storage systems (ESSs), household ESSs, and small battery packs.

Although the present disclosure has been illustrated and described with respect to specific embodiments thereof, it will be apparent to those skilled in the art that the present disclosure may be improved and modified in various manners without departing from the technical spirit of the present disclosure as defined by the following claims.

## Claims

1. A battery cell comprising:
an electrode assembly formed by overlapping a plurality of electrodes;
a packaging material folded to wrap around the electrode assembly to form a rectangular pouch;
a sealing part formed by overlapping and contacting edges of the folded packaging material in which the electrode assembly is wrapped; and
a pair of leads whose ends are connected to the plurality of electrodes inside the packaging material and whose other ends are exposed to the outside of the packaging material,
wherein the pair of leads are exposed in the same direction.

2. The battery cell of claim 1, wherein the pair of leads are disposed together on one side of the pouch.

3. The battery cell of claim 2, wherein the pair of leads are disposed on the upper surface of the pouch, and the other ends of the pair of leads protrude upward.

4. The battery cell of claim 1, wherein the sealing part is bent to contact the upper surface and the side surface of the pouch.

5. The battery cell of claim 1, wherein wing portions formed by folding the packaging material are positioned at the top and bottom of the side surface of the pouch,
wherein the wing portions are folded to contact the side surface of the pouch.

6. The battery cell of claim 1, wherein a pair of protrusions are formed on the upper surface of the pouch, and the other ends of the pair of leads are exposed to the outside through the ends of the protrusions.

7. The battery cell of claim 6, wherein the sealing part on the upper surface of the pouch is bent in a horizontal direction and the protrusions are bent upward to form a terrace structure, and the pair of leads are bent in the horizontal direction and then bent upward to form a terrace structure.

8. The battery cell of claim 6, further comprising an insulating tape disposed on the side surface of the pouch to fix bending of the sealing part and cover the sealing part on the side surface of the pouch.

9. The battery cell of claim 8, wherein the wing portions formed by folding the packaging material are disposed at the top and bottom of the side surface of the pouch, the wing portions are folded to be positioned on the side surface of the pouch, and the insulating tape is disposed to cover the wing portions.

10. The battery cell of claim 8, wherein the insulating tape extends from the side surface to the upper surface of the pouch, covers the sealing part on the upper surface of the pouch, and fixes bending of the sealing part.

11. The battery cell of claim 10, wherein the pair of protrusions are connected through a connecting sealing part while being spaced apart from each other, and the insulating tape covers the bent sealing part on the upper surface of the pouch, avoiding points where the protrusions are formed and the connecting sealing part.

12. The battery cell of claim 8, wherein the insulating tape extends to the lower surface of the pouch, and a width of the insulating tape is greater than a width of the sealing part and less than a side width of the pouch.

13. The battery cell of claim 1, wherein a height of an internal space of the pouch is greater than a height of the electrode assembly, and a gas pocket is formed at an upper part of the internal space of the pouch.

14. A battery pack comprising the battery cell of claim 1.

15. A vehicle comprising the battery pack of claim 14.
